Europäisches Patentamt

European Patent Office

Office européen des brevets

(19)

(11) Publication number: **0 015 128**
**B1**

## EUROPEAN PATENT SPECIFICATION

(12)

(45) Date of publication of patent specification: **16.11.83**

(51) Int. Cl.³: **A 47 L 9/24, H 01 R 43/00**

(21) Application number: **80300449.8**

(22) Date of filing: **15.02.80**

(54) Hose assembly and method of making it.

(30) Priority: **26.02.79 US 14804**

(43) Date of publication of application:
**03.09.80 Bulletin 80/18**

(45) Publication of the grant of the patent:
**16.11.83 Bulletin 83/46**

(84) Designated Contracting States:
**DE FR GB IT**

(56) References cited:
**DE - B - 1 125 989**
**FR - A - 1 223 745**
**GB - A - 967 041**
**GB - A - 2 000 245**
**US - A - 3 127 227**
**US - A - 3 141 054**

(73) Proprietor: **AUTOMATION INDUSTRIES INC.**
**500 West Putnam Avenue**
**Greenwich Connecticut 06830 (US)**

(72) Inventor: **Kutnyak, Thomas Allen**
**101 Coventry Drive**
**Greenwood South Carolina (US)**

(74) Representative: **Wright, Peter David John et al,**
**R.G.C. Jenkins & Co. 12-15, Fetter Lane**
**London EC4A 1PL (GB)**

Courier Press, Leamington Spa, England.

# Hose assembly and method of making it

The present invention relates to a hose assembly and a method of making it, the hose assembly comprising at least two electrical conductors which extend along a hose and through an end fitting.

It is known from the prior art to mold integral hose connectors at opposite ends of the hose having electrical components embedded therein. Such hose assemblies and methods for providing same are described and illustrated in U.S. Patents 3,928,715; 3,733,697 and 3,636,285. These prior art molded on end fittings and hose assemblies employ two reinforcing wires coated with a thermoplastic insulating material. The wires in addition to reinforcement serve as electrical conductors and carry electrical energy for use at a point on the hose assembly. Insulated wire is placed so that one helix is parallel with the other and an extruded thermoplastic sleeve covers and is bonded to the insulated conductive wire helix. Wires at each end of the hose are stripped to their insulation thus exposing bare conductive wire. Thereafter female members or male pins are soldered or mechanically attached with a crimped splice to each end of the hose. A core is then inserted into each end of the hose and the hose ends are placed into an injection mold conforming to a pre-designed configuration. The female members and male pins are located in a position so that a complete electrical circuit is provided after molding of the end connectors. A thermoplastic material compatible with the hose material is injected into the mold cavity after which the assembly is water cooled to provide a hose assembly with molded on end connectors in an integral hose assembly. Thus a current carrying hose assembly with molded on end fittings is provided in a one stage injection molding process.

Although this design has enjoyed widespread use in the industry, its use inherently involves certain disadvantages and problems. For example, in empoying a one stage process, the wires are subject to movement, i.e., they are not immobilized, they are not kept separated, thus exposing the current carrying wire on its inside periphery to a metal wand which is inserted into the end fitting. This creates a very unfavorable and unsafe condition which might result in shortcircuiting. Since the wires are found to be unstable in these fittings, unacceptable high reject rates result in the manufacture of these units. Electrical properties of these end fittings can only be tested after the one stage injection process is performed. Thus, if electrical properties are found to be unsatisfactory, the unit must be discarded.

In an earlier patent, US—A—4,162,370 (GB—A—2,000,245), the present applicants disclose a hose assembly involving separate premolding of a hose end fitting and an insert body. The end fitting is screw-fitted to the hose after the insert body has been molded onto the connections between the hose electric conductors and the wires of an electric harness carrying an electric plug or socket connector at the other end. The insert body comprises a portion between and underlying the conductors at their junction, and a strain relief body which is fitted into a located recess in the end fitting.

This assembly thus avoided the problems of shortcircuiting encountered in prior art, and also enabled checking of the electric connections before attaching the end fitting. However, as the end fitting was not molded onto the hose, problems, such as air turbulence, wicking of liquids, and ingress of dirt were discovered. Also, the securement of the end fitting by means of adhesive was found to be inadequate in some circumstances.

In accordance with the invention, there is provided a hose assembly which comprises at least two electrical conductors which extend along a hose and through an end fitting of the hose, an insert within said end fitting, the insert comprising an insulating base portion lying radially inwardly of the conductors, and an insulating partition portion between said two conductors, the conductors passing through the insert and being fusion bonded thereto where they pass through it, characterised in that the end fitting is molded onto both an end portion of the hose and the insert with the conductors passing through it, so that the insert is fusion bonded to the end fitting.

There is also provided in accordance with the invention a method of making a hose assembly which comprises at least two electrical conductors which extend along a hose and through an end fitting, the method comprising taking connection means which includes a portion of said conductors, and injection molding around said connection means an insulating insert which maintains the conductors spaced apart, electrically connecting the portion of the conductors carrying the insert to a further portion of the conductors located primarily in the hose, to complete said at least two electrical conductors, characterised by injection molding said end fitting over both an end portion of the hose and the insert with the conductors passing through it, thereby fusion bonding the insert to the end fitting.

Thus, for example, an electrical cord having at least two current carrying wires enclosed in, for example, plastic insulation is first stripped at the ends and placed into a two part mold with those portions to be electrically connected located inside the mold. Clamp pressure is then applied at, for example about 1,000 psi (68,95 bar) sealing the cord to the mold. The injection molding machine nozzle may then be mated with the mold and subsequantly melted thermoplastic or thermoset material is injected into the insert mold cavity to provide for first stage injection molding. Introduction of the thermoplastic material, for example, is continued until the cavity is filled and thereafter terminated after which the mold is allowed to cool. Then the first injection molded piece is sufficiently cooled, thus providing the insert, which is permanently molded on to the electric cord. The insert is provided with a molded partition positioned between the two current carrying wires to avoid contact between the wires. The insert may then be assembled to the current carrying hose by first trimming the current carrying wires from the hose to a desired length bending them to approximately a 90° angle and stripping the plastic insulation. The wires of the hose and insert are then placed into an electrical splice or connector which is crimped at four places mechanically, thus providing a permanent splice of the hose and insert wires. This operation is performed at both ends of the hose and thereafter the hose, wires, splices, cords and plugs may be checked for electrical properties. This process is adaptable to either of two types of current carrying hose conventionally employed such as the parallel helix current carrying hose more specifically defined in corresponding European Patent Application No. 5278, or a hose having conductors in the design of a figure eight more specifically defined in U.S. Patent No. 4162370 or other analogous and equivalent type hosing. A metal mold core which provides the interior periphery of the end fitting upon second stage injection is placed into the inside diameter of the current carrying hose molding and holds the insert in place so that the hose is positioned and located on the mold core seat. This assembly, including the mold core with the hose, insert, splices, cord and plug, is positioned inside the upper and lower mold cavities of the injection molding system. The mold is then clamped under pressure, for example 1,000 psi (68,95 bar) sealing the electrical cord and the hose to the mold. The mold is then mated with the injection molding system and e.g. melted thermoplastic is injected into the mold cavity to perform the second stage injection molding. After the cavity is filled, the melted thermoplastic is permitted to cool under pressure, thus providing the molded end fitting which is permanently bonded to the hose and the plastic insert fused with the melted thermoplastic of the end fitting. After the cooling process, the hose and end fitting are removed from the cavity and mold core is removed, thus providing the finished assembly.

The insert provided in the first stage injection molding process of the instant invention includes an element which adheres to a means for providing external electrical connection, and for securing this means by adhesion and mechanical means so that upon application of force to the current carrying hose, e.g. as experienced in abusive use of a vacuum cleaner, the electrical connection of the hose to the end fitting may only be broken by pulling the restraining block of the insert through the body of the end fitting. The insert comprises a partition which separates the conductors and insulates them from a metallic wand that may be inserted into the end fitting in a typical vacuuming operation. In addition, the insert carries a restraining block, the exterior periphery of which surrounds and adheres to the conductors. The block may be further provided with mechanical or other means to further insure that electrical separation of the current carrying hose from the end fitting may only be accomplished by pulling the restraining block through the body of the end fitting or damaging the integrity of the body of the end fitting. Thus, under normal or abusive conditions of operation, the hose as a practical matter may not be electrically separated from the end fitting.

First stage injection molding may be employed for a suitable time although 30 seconds is found to be satisfactory. The second stage molding process may be employed for any suitable time; however, 50 seconds is found to be satisfactory.

Any suitable injection moulding system may be employed in the system of the instant invention; however, a shuttle type is preferred to employ the two stage injection molding process of the instant invention.

The general aspects of the system of the instant invention having been described, the specifics will be more clearly understood with reference to the accompanying drawings of which:

FIGURE 1 illustrates a conventional current carrying wire placed in a two part mold.

FIGURE 2 illustrates the first stage injection molding.

FIGURE 3 illustrates an embodiment of the insert of the instant invention.

FIGURE 4 illustrates the manner of electrical connection of the insert assembly to the current carrying hose.

FIGURE 5 illustrates a mold core assembly inserted into the current carrying hose.

FIGURE 6 illustrates insertion of the mold core and current carrying hose assembly into the injection molding system with second stage injection of thermoplastic into the mold cavity.

FIGURES 7a and 7b illustrate socket and plug ends of the finished assembly.

FIGURE 8 illustrates an embodiment of the metallic mold core of the instant invention.

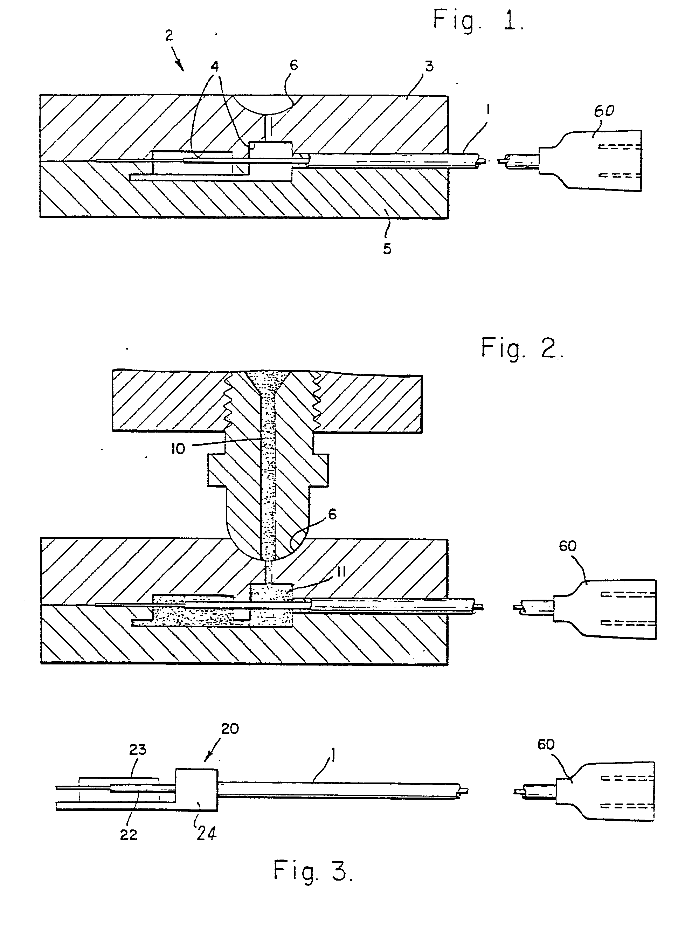

FIGURE 1 illustrates a conventional current carrying wire 1 placed in a two part mold 2 having a top half section 3, a cavity to be filled 4, a lower half 5 and an injection nozzle seat 6. Electrical cord 1 having a plug 60 at one end, is placed into the mold 2 with the portion of the cord 1 to be electrically connected located inside the mold 2. Clamp pressure is applied at approximately 1,000 psi (68,95 bar) sealing the cord 1 to the internal part of the mold 2. The injection molding system nozzle 6 is mated with the mold 2 and melted thermoplastic material 10 in FIGURE 2 is introduced into the mold cavity 11 until the cavity 11 is filled. After cooling, the finished molding constitutes an insert for the second stage of molding.

In FIGURE 3 is seen an illustrative embodiment of the insert of the instant invention having a molded on connection or insert 20 connected to the cord 1. The stripped ends of the wires 22 are separated by a partition 23. A restraining block 24 has the cord 1 adhered to its interior periphery. The base of the insert 20 serves to insulate the cord 1 from a wand which may be inserted (not shown).

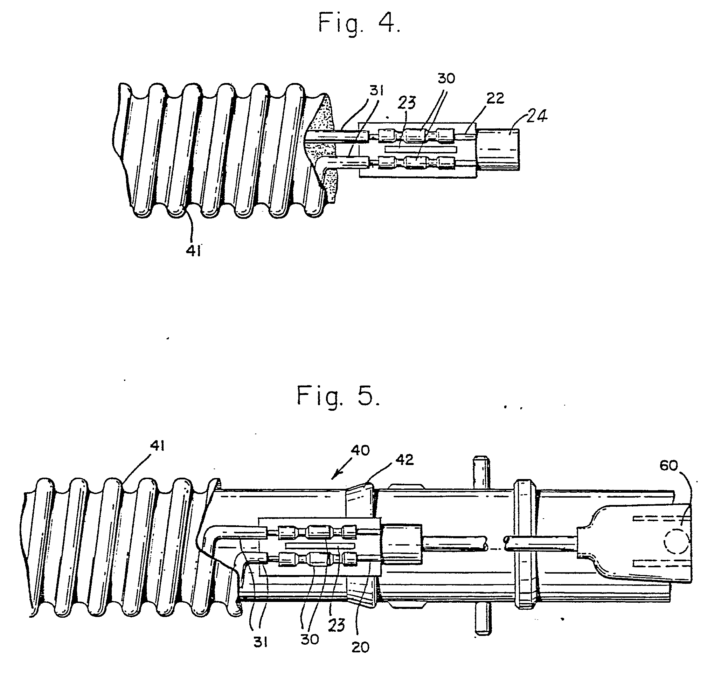

In FIGURE 4 is seen the insert of FIGURE 3 electrically coupled to a current carrying hose in a helical configuration. Splices 30 connect the wires 22 to the wires of the current carrying helix 31. The splices are crimped mechanically at four locations in order to ensure proper electrical contact.

In FIGURE 5 there is seen a mold core generally designated as 40 which is placed into the inside diameter of the hose 41 locating the hose insert on the mold core seat 42.

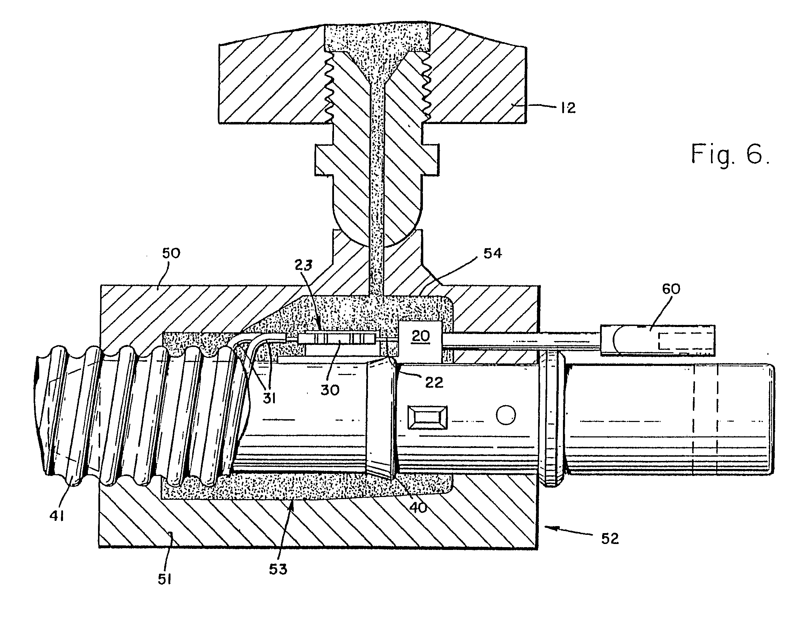

In FIGURE 6 is seen the mold core 40 with the hose 41, insert 20 having crimped splices 30 and cord 1 positioned inside the cavity formed by upper and lower mold parts 50 and 51 respectively of an injection mold system generally designated as 52. Mold 52 is clamped under appropriate pressure sealing the electrical cord 1 and hose 41 in the mold 52. The mold 52 is mated with the injection molding system 12 and a second stage melted thermoplastic 55 is injected into the mold cavity, generally designated as 53. After the cavity 53 is filled the melted thermoplastic 55 is permitted to cool under pressure and, at this point, the molded end fitting 54 is permanently bonded to the hose 41 and the plastic insert 20 is fused with the melted thermoplastic of the end fitting 54. The hose 41, the end fitting 54 and the insert 20 are now an integral assembly. After the cooling process, the hose 41 and the end fitting 54 are removed from the cavity 53 and mold core 40.

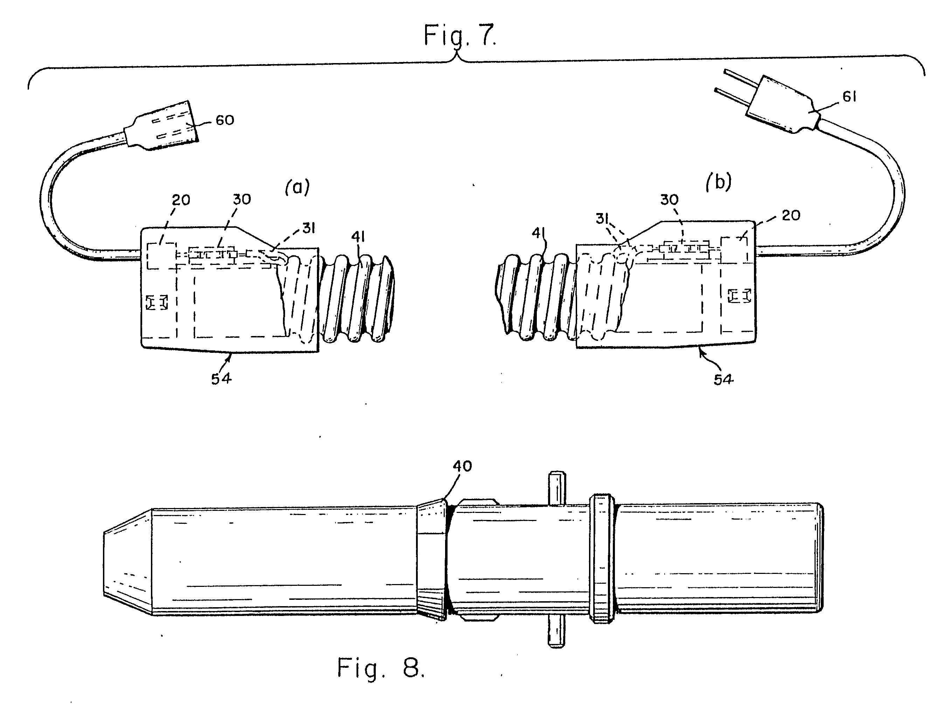

IN FIGURES 7a and 7b is seen the current carrying hose 41 permanently connected to the molded on end fitting 54 having electrical cord 1 entering and permanently affixed to insert 20 and electrically connected to the current carrying hose 41 at spliaces 30, carrying the female plug 60. In FIGURE 7b there is seen the same molded on end fitting 54 connected to a male electrical connector or plug 61.

FIGURE 8 illustrates an embodiment of the metallic mold core of the instant invention. The mold core as recited above is inserted into the current carrying hose assembly 41 and the electrical connections are made at 30. Thereafter, the mold core assembly 40 and current carrying hose 41 are placed into the injection molding apparatus 52 as in FIGURE 6 and the thermoplastic is introduced to provide the molded on end fitting as in FIGURE 7a or 7b on one end of the assembly.

Any suitable molding apparatus and process may be employed in the two stage injection molding of the instant invention. Typical methods of injection molding and apparatus therefor which may be employed to provide the molded on end fitting plus plug on one end of the assembly, and the molded on end fitting plus socket on the other end of the assembly include employing conventional injection molding equipment, for example, Autojector's HS-30-S model, a thermoplastic injection molding system employing a shuttle table, among others.

Any suitable electric cord may be employed in the system of the instant invention. Typical electrical cords include 18 AWG 2 conductor electrical cord, each conductor having 41 No. 34 bunched wires preferably of the SPT, FZT or SVT type, among others.

Any suitable thermoplastic or thermoset material may be employed in the injection molding of the insert and overlying molded on end fitting or the instant invention. Typical thermoplastic includes polyvinyl chloride, poly blends of polyvinyl chloride, polyurethanes, polystyrenes and others. Typical thermosets include organic rubbers, crosslinked polyvinyl chloride and others.

Any suitable current carrying hose may be employed in the system of the instant invention, including the figure eight conductive configuration and the parallel helix more fully outlined in U.S. Patent No. 4162370 and European Patent Application No. 5278 respectively.

Any suitable mold core may be employed. A typical mold core includes tool steel and aluminum or combinations thereof, among others. The cores are machined to the desired configuration employing conventional methods.

Although specific materials and conditions are set forth in the above illustrations or descriptions, these are merely illustrative of the present invention. Various other materials may be substituted with similar results. Various other steps may be employed in substitution or in addition to those recited above with similar results obtained, e.g., a conventional wand may be employed in the second stage injection molding place of the core, the wand then being permanently molded into place.

**Claims**

1. A hose assembly which comprises at least two electrical conductors which extend along a hose (41) and through an end fitting (54) of the hose (41), and insert (20) within said end fitting, the insert (20) comprising an insulating base portion lying radially inwardly of the conductors, and an insulating partition portion (23) between said two conductors, the conductors passing through the insert (20) and being fusion bonded thereto where they pass through it, characterised in that the end fitting (54) is molded onto both an end portion of the hose (41) and the insert (20) with the conductors passing through it, so that insert (20) is fusion bonded to the end fitting (54).

2. A hose assembly as claimed in claim 1 characterised in that the conductors are conductors of the kind provided with an insulating covering.

3. A hose assembly as claimed in claim 1 or claim 2 characterised in that the insert (20) comprises a restraining block portion (24) through which the conductors pass.

4. A hose assembly as claimed in any preceding claim characterised in that the conductors comprise conductor portions (31) primarily located in the hose, and connected in the vicinity of the insert (20) to further conductor portions (22) extending outwardly from the end fitting (54).

5. A hose assembly as claimed in claim 4, when dependent on claim 3, wherein conductor portions (31, 22) are connected at a position located inwardly from the restraining block portion (24) relative to the free extremity of the end fitting (54).

6. A method of making a hose assembly which comprises at least two electrical conductors which extend along a hose (41) and through an end fitting (54), the method comprising taking connection means which includes a portion (22) of said conductors, and injection molding around said connection means an insulating insert (20) which maintains the conductors spaced apart, electrically connecting the portion (22) of the conductors carrying the insert (20) to a further portion (31) of the conductors located primarily in the hose (41), to complete said at least two electrical conductors, characterised by injection moulding said end fitting (54) over both an end portion of the hose (41), and insert (20) with the conductors passing through it, thereby fusion bonding the insert (20) to the end fitting (54).

7. A method claimed in claim 6 characterised in that said connection means is a length of electrical cord (1) having an electrical plug (61) or socket (60) connector at one end thereof.

8. A method as claimed in claim 6 or claim 7 characterised in that a mold core (40) is employed to maintain the hose end shape and position the insert (20) relative to the hose end during the second injection molding stage.

9. A method as claimed in claim 6 or claim 7 characterised in that a wand is employed to maintain the hose end shape and position the insert (20) relative to the hose end during the second injection molding stage.

**Revendications**

1. Tuyau flexible incorporant au moins deux conducteurs électriques qui s'étendent globalement dans le sens de la longueur du tuyau (41) et à travers au moins un raccord d'extrémité (54) prévu à un bout du tuyau (41), un élément (20) inséré dans ce raccord, cet élément (20) comprenant une base isolante située radialement à l'intérieur des conducteurs et une cloison isolante (23) entre les deux conducteurs, les conducteurs traversant l'élément inséré (20) et étant liés par fusion à cet élément à l'endroit où ils le traversent, caractérisé en ce que le raccord (54) est moulé à la fois sur le bout du tuyau (41) et sur l'élément inséré (20) traversé par les conducteurs, ce moulage étant effectué de manière qu'une liaison par fusion soit établie entre l'élément inséré (20) et le raccord (54).

2. Tuyau selon la revendication 1, caractérisé en ce que les conducteurs portent un revêtement isolant.

3. Tuyau selon la revendication 1 ou 2, caractérisé en ce que l'élément inséré (20) comporte une portion d'ancrage (24) qui est traversée par les conducteurs.

4. Tuyau selon l'une quelconque des revendications précédentes, caractérisé en ce que les conducteurs comportent des parties (31) situées essentiellement dans le tuyau 41 et d'autres parties (22) qui font saillie à l'extérieur du raccord d'extrémité (54), les deux parties des conducteurs étant reliées l'une à l'autre à proximité de l'élément inséré (20).

5. Tuyau selon les revendications 4 et 3, où les parties (31, 22) des conducteurs sont reliées l'une à l'autre à un point situé à l'intérieur de la portion d'ancrage (24) de l'élément inséré (20), par rapport à l'extrémité libre du raccord d'extrémité (54).

6. Procédé pour fabriquer un tuyau incorporant au moins deux conducteurs électriques qui s'étendent globalement dans le sens de la longueur du tuyau (41) et à travers au moins un raccord d'extrémité (54) à un bout du tuyau, procédé qui consiste à prendre un dispositif de branchement comportant une partie (22) desdits conducteurs, à mouler autour de ce dispositif de branchement un élément isolant à insérer (20), qui maintient les conducteurs espacés l'un de l'autre, et à relier électriquement la partie (22) des conducteurs portant l'élément à insérer (20) à la partie (31) des conducteurs située essentiellement dans le tuyau (41), de manière à compléter les deux conducteurs, caractérisé en ce que, par un moulage par injection, on moule le raccord (54) à la fois sur le bout du tuyau (41) et sur l'élément à insérer (20), traversé par les conducteurs, de manière à établir une liaison par fusion des matières constitutives entre l'élément inséré (20) et le raccord d'extrémité (54).

7. Procédé selon la revendication 6, caractérisé en ce que le dispositif de branchement est un morceau de cordon électrique (1) qui porte une fiche mâle (61) ou femelle (60) à une extrémité.

8. Procédé selon la revendication 6 ou 7, caractérisé en ce que l'on utilise un noyau (40) pour maintenir le bout du tuyau (41) à la forme désirée et pour positionner l'élément (21) à insérer par rapport au bout du tuyau pendant la deuxième opération de moulage par injection.

9. Procédé selon la revendication 6 ou 7, caractérisé en ce que l'on utilise une baguette pour maintenir le bout du tuyau (41) à la forme désirée et pour positionner l'élément (20) à insérer par rapport au bout du tuyau pendant la deuxième opération de moulage par injection.

## Patentansprüche

1. Schlauchanordnung, welche wenigstens zwei elektrische Leiter, die sich längs eines Schlauchs (41) und durch ein Endpaßstück (54) des Schlauchs (41) erstrecken, einen Einsatz (20) in dem Endpaßstück, wobei der Einsatz (20) einen isolierenden Basisabschnitt hat, der radial innerhalb der Leiter liegt, und eine isolierende Trennwand (23) zwischen den beiden Leitern aufweist, wobei die Leiter durch den Einsatz (20) hindurchgehen und dort, wo sie hindurchgehen, schmelzgebunden sind, dadurch gekennzeichnet, daß das Endpaßstück (54) sowohl an einem Endabschnitt des Schlauchs (41) und an dem Einsatz (20) mit den durch ihn hindurchgehenden Leitern so angeformt ist, daß der Einsatz (20) mit dem Endpaßstück (44) durch Verschmelzung verbunden ist.

2. Schlauchanordnung nach Anspruch 1, dadurch gekennzeichnet, daß die Leiter von der Art sind, die mit einem isolierenden Überzug versehen ist.

3. Schlauchanordnung nach Anspruch 1 oder 2, dadurch gekennzeichnet, daß der Einsatz (20) einen Halteblockabschnitt (24) aufweist, durch den die Leiter hindurchgehen.

4. Schlauchanordnung nach einem der vorhergehenden Ansprüche, dadurch gekennzeichnet, daß die Leiter Leiterabschnitte (31) aufweisen, die primär in dem Schlauch angeordnet und in der Nähe des Einsatzes (20) mit weiteren Leiterabschnitten (22) verbunden sind, die sich nach außen aus dem Endpaßstück (54) erstrecken.

5. Schlauchanordnung nach Anspruch 4, wenn dieser von Anspruch 3 abhängig ist, bei welchem Leiterabschnitte (31, 22) an einer Stelle angeschlossen sind, die vom Halteblockabschnitt (24) aus bezogen auf das freie Ende des Endpaßstücks (54) nach innen angeordnet ist.

6. Verfahren zur Herstellung einer Schlauchanordnung, welche wenigstens zwei elektrische Leiter, die sich längs eines Schlauchs (41) und durch ein Endpaßstück (54) erstrecken, aufweist, bei welchem eine Anschlußeinrichtung genommen wird, welche einen Abschnitt (22) der Leiter einschließt, um die Anschlußeinrichtung ein isolierender Einsatz (20) spritzgegossen wird, der die Leiter im Abstand hält, und der Abschnitt (22) der Leiter elektrisch angeschlossen wird, der den Einsatz (20) zu einem weiteren Abschnitt (31) der Leiter trägt, der primär im Schlauch (41) positioniert ist, um wenigstens zwei elektrische Leiter fertigzustellen, dadurch gekennzeichnet, daß das Endpaßstück (54) sowohl über einen Endabschnitt des Schlauchs (41) als auch den Einsatz (20) mit den durch ihn hindurchgehenden Leitern Spritzgegossen wird, wodurch der Einsatz (20) mit dem Endpaßstück (54) durch Schmelzen verbunden wird.

7. Verfahren nach Anspruch 6, dadurch gekennzeichnet, daß die Anschlußeinrichtung ein Längenstück einer elektrischen Leitungsschnur (1) ist, die einen elektrischen Anschluß mit vorstehendem Stift (61) oder mit Buchse (60) an einer Stirnseite aufweist.

8. Verfahren nach Anspruch 6 oder 7, dadurch gekennzeichnet, daß ein Formkern (40) verwendet wird, um die Schlauchendform und die Lage des Einsatzes von sich bezogen auf das Schlauchende während des zweiten Spritzgießvorgangs aufrechtzuerhalten.

9. Verfahren nach Anspruch 6 oder 7, dadurch gekennzeichnet, daß eine Wand verwendet wird, um die Schlauchendform und die Lage des Einsatzes (20) bezüglich des Schlauchendes während des zweiten Spritzgießvorgangs aufrechtzuerhalten.

Fig. 1.

Fig. 2.

Fig. 3.

Fig. 4.

Fig. 5.

2

Fig. 6.

Fig. 7.

(a)                    (b)

Fig. 8.